# NEUE EUROPÄISCHE PATENTSCHRIFT

(11) **EP 0 791 609 B2**
(45) Veröffentlichungstag und Bekanntmachung des Hinweises auf die Entscheidung über den Einspruch: **01.12.2010**
(45) Hinweis auf die Patenterteilung: 30.07.2003
(21) Anmeldenummer: 97101835.3
(22) Anmeldetag: 06.02.1997
(51) Int. Cl.: C08F 210/16, C08F 210/06, C08F 2/00, C08F 297/08, F16L 9/12

(54) **Verfahren zur Herstellung von Rohren aus einem Propylen-Ethylen-Copolymerisat**
Process for the manufacture of pipes from a propylene-ethylene copolymer
Procédé de préparation de tuyaux à partir d'un copolymère propylène-éthylène

(30) Priorität: 22.02.1996 DE 19606510
(43) Veröffentlichungstag der Anmeldung: 27.08.1997
(73) Patentinhaber: Basell Poliolefine Italia S.r.l., 20124 Milano (IT)
(72) Erfinder: Dolle, Volker, Dr., 64625 Bensheim (DE); Chicote Carrion, Eduardo, Dr. Chem., 43330 Riudoms Prov. Tarragona (ES); Terwyen, Herbert, Dr. Ing., 65934 Frankfurt (DE)
(74) Vertreter: Reiss, Gilles François

(56) Entgegenhaltungen:
- EP-A- 0 339 804
- EP-A- 0 498 603
- EP-A- 0 516 018
- EP-A- 0 600 246
- EP-A2- 0 498 603
- WO-A-91/14718
- WO-A-96/11216
- WO-A1-91/14718
- WO-A1-96/11216
- JP-T1- 59 172 507
- CHANDRASEKHAR V. ET AL: 'Recent developments in Ziegler-Natta catalysts for olefin polymerization and their processes' INDIAN JOURNAL OF TECHNOLOGY Bd. 26, 26 Februar 1988, Seiten 53 - 82
- KIRK-OTHMER: 'Encyclopedia of Chemical Technology, dritte Auflage, Band 16', 1981 Seiten 455 - 457

## Beschreibung

Die vorliegende Erfindung betrifft ein Vefahren zur Herstellung von Rohrer aus einem Copolymerisat aus Ethylen- und Propylenbausteinen, das einen Ethylengehalt im Bereich von 1 bis 10 Gew.-% besitzt.

Aus der DE-A-40 19 053 sind Homopolymere mit breiter Molmassenverteilung bekannt. Diese Homopolymeren können unter großem Aufwand zu Rohren verarbeitet werden. So hergestellte Rohre weisen aber nachteiligerweise eine hohe Brüchigkeit und eine rauhe Oberfläche auf, wodurch diese Rohre in der Praxis nicht mehr brauchbar sind.

Aus der EP-A-573 862 ist ein Verfahren zur Herstellung von Polypropylen mit einer Molmassenverteilung M_{w}/Mₙ von > 20 und guten Verarbeitungseigenschaften bekannt. Der Schmelzflußindex beträgt 2 dg/min; die intrinsische Viskosität beträgt 280 ml/g. Das so beschriebene Polypropylen wird in einer Gasphasenpolymerisation hergestellt. Die Beispiele 1 bis 4 der EP-A-573 862 beschreiben die Herstellung eines
breitverteilten Homo-PP Pulvers. Die Polydispersität M_{w}/Mₙ ist zwar in keinem Beispiel angegeben, aber aufgrund der Angaben zur intrinsischen Viskosität (800 ml/g und 67 ml/g) kann auf eine sehr große Molmassenspreizung in der ersten und zweiten Stufe geschlossen werden.

Die aus dem Stand der Technik (EP-A-573 862) bekannten Verfahren wurden nachgearbeitet, um die Eigenschaften der Materialien prüfen zu können. Es wurde gefunden, daß alle Rohstoffe eine große Brüchigkeit bei eingeschränkter Verarbeitungsqualität in Verbindung mit einer Materialinhomogenität aufwiesen. Die Herstellung von PP-Rohren in einem üblichen Extrusionsverfahren war z.T. nicht möglich, weil die Viskosität der Schmelze für ein Extrusionsverfahren nicht ausreichend war.

Aufgabe der vorliegenden Erfindung war es, ein Verfahren zu finden, mit dem sich auf herkömmlichen Fertigungswerkzeugen Rohre herstellen lassen, die neben einer niedrigen Brüchigkeit und einer glatten Oberfläche zusätzlich eine hohe Zähigkeit und eine gute Steifigkeit in Verbindung mit einem hervorragenden Zeitstandvermögen besitzen.

Gelöst wird diese Aufgabe durch das Verfahren gemäß Anspruch 1.

Überraschenderweise wurde gefunden, daß durch das erfindungsgemäß Verfahren sich Propylen/Ethylen/Copolymerisate auf herkömmlichen Fertigungswerkzeugen zu Rohren verarbeiten lassen, die glatte Fertigteiloberflächen, gute Verarbeitungsqualität, hohe Schlagzähigkeit bei guter Härte und Zeitstandfestigkeit aufweisen.

In der ersten Reaktionsstufe wird kontinuierlich ein hochmolekulares Produkt mit einer Viskosität von 500 bis 1400 ml/g und einem Anteil am Gesamtpolymeren von 20 bis 80 Gew.-%, vorzugsweise von 45 bis 75 Gew.-% hergestellt, besonders bevorzugt von 48 bis 65 Gew.-%, während in der zweiten Reaktionsstufe kontinuierlich ein niedermolekulares Produkt mit einer Viskosität von 200 bis 400 ml/g und einem Anteil von 80 bis 20 Gew.-%, vorzugsweise von 55 bis 25 Gew.-%, besonders bevorzugt von 52 bis 35 Gew.-%, hergestellt wird.

Die Polymerisation wird in einem sogenannten Masseverfahren (Bulk-Process) in zwei Reaktonsstufen durchgeführt, wobei das Monomere, das Propylen, gleichzeitig Edukt und Suspensionsmittel ist.

Das erfindungsgemäBe Verfahren wird als zweistufige Polymerisation mit gegebenenfalls vorgeschalteter Vorpolymerisation ausgeführt. Die Vorpolymerisation kann in diskontinuierlicher oder auch kontinuierlicher Betriebsweise ausgeführt werden.

Die Komponente B und die Komponente C werden vor der Vorpolymerisation miteinander vermischt und dann mit dem Katalysator in Kontakt gebracht. In Gegenwart dieser aktiven Komponenten wird Propylen in Suspension oder im Masseverfahren vorpolymerisiert. Bevorzugt ist die Vorpolymerisation im flüssigen Monomeren. Die Verweilzeit beträgt 4 bis 10 min, die Temperatur der Vorpolymerisation liegt im Bereich von 10 bis 25 °C.

Das Vorpolymerisat wird dann in die erste Reaktionsstufe der Polymerisation eingebracht und in flüssigem Propylen bei einer Temperatur von 55 bis 100 °C und einer Verweilzeit von 0,5 bis 3,5 h polymerisiert. Es wird ein Phasenverhältnis im Bereich von 2,5 bis 4 I flüssiges Propylen pro kg PP, vorzugsweise von 3,3 I flüssiges Propylen pro kg PP, eingestellt. In die erste Reaktionsstufe wird Ethylen kontinuierlich in der Art eindosiert, damit sich eine C₂-Konzentration in der flüssigen Phase von 0,1 bis 20 Gew.-% bevorzugt von 0,1 bis 10 Gew.-% einstellt. Zur Molmassenregelung wird Wasserstoff eindosiert.

Nach der ersten Reaktionsstufe wird das mehrphasige System in die zweite Reaktionsstufe überführt und dort bei einer Temperatur von 55 bis 100 °C polymerisiert. Die zweite Reaktionsstufe findet in einem zweiten Reaktor statt. Dort wird ein Phasenverhältnis von 1 bis 2,5 I flüssiges Propylen pro kg PP, vorzugsweise von 1,9 I flüssiges Propylen pro kg PP, eingestellt. Erfindungsgemäß bevorzugt ist es, bei dem hier beschriebenen Verfahren unterschiedliche Phasenverhältnisse in den beiden Reaktoren einzustellen. Es wird ebenfalls wie oben beschrieben Ethylen und H₂ zudosiert.

Die Temperaturen, Wasserstoffkonzentrationen und Ethylenkonzentrationen in beiden Reaktoren können gleich oder verschieden sein. Geeignete Reaktoren sind Rührkessel-Reaktoren oder Schlaufenreaktoren.

Es ist möglich, das Monomere zwischen den beiden Reaktoren zu entspannen und das noch polymerisationsaktive Katalysator/PP System in den zweiten Reaktor einzudosieren. Dabei kann in dem zweiten Reaktor auch eine niedrigere Wasserstoffkonzentration als im ersten Reaktor eingestellt werden.

Als Komponente B wird Trimethylaluminium, Triisobutylaluminium oder Triethylaluminium verwendet. Bevorzugt ist die Verwendung von Triethylaluminium oder Triisobutylaluminium. Besonders bevorzugt ist die Verwendung von Triethylaluminium.

Als Komponente C wird Cyclohexylmethyldimethoxysilan, Biscyclopentyldimethoxysilan oder Diphenyldimethoxysilan eingesetzt. Besonders bevorzugt ist die Verwendung von Cyclohexylmethyldimethoxysilan oder Biscyclopentyldimethoxysilan.

Die Komponente B wird in einer Konzentration von 0,001 bis 10 mmol/l, vorzugsweise 0,1 bis 5 mmol/l eingesetzt. Die Komponente C wird in einem Verhältnis R zur Komponente B eingesetzt. Das Verhältnis berechnet sich als Quotient der Konzentration B zu der Konzentration C jeweils in mol /l. Das Verhältnis beträgt 1 bis 200, bevorzugt 2 bis 100, besonders bevorzugt 2,5 bis 75.

Erfindungsgemäß bevorzugt sind Produkte mit einem MFR (230/5) von 0,01 bis 5 dg/min, besonders bevorzugt von 0,02 bis 2 dg/min. Das Copolymerisat gemäß der Erfindung besteht zu 1,0 bis 10 Gew.-% aus Ethylenbausteinen und zu 99 bis 90 Gew.-% aus Propylenbausteinen.

Nach der zweiten Reaktionsstufe wird das Gemisch aus Propylen, Wasserstoff und Ethylen aufgearbeitet. Bevorzugt ist das schnelle Verdampfen des flüssigen Monomeren in einer Stufe. Anschließend wird das gereinigte Copolymerisat im Inertgasstrom getrocknet und es wird sichergestellt, daß das Copolymerisat monomerfrei ist. Das so erhaltene hochmolekulare Copolymerisat wird mit Stabilisatoren, Gleitmitteln, Füllstoffen, Pigmenten etc. versetzt und granuliert. Die Granulierung wird in einem Extruder oder Kneter vorgenommen.

Das verdampfte Monomergemisch wird kondensiert und destillativ in Ethylen, Propylen und Wasserstoff aufgetrennt. Die Destillation ist so auszulegen, daß eine Wasserstoffkonzentration von < 150 ppm, bevorzugt von < 80 ppm, sichergestellt ist. Das so gereinigte Monomer wird dann wieder in den ersten Reaktor eindosiert.

Die folgenden Beispiele sollen die Erfindung erläutern. Zur Charakterisierung der hergestellten Produkte wurden folgende polymeranalytischen Methoden verwendet:

| | |
|---|---|
| Schmelzindex MFR (230/5) | nach DIN 53735 |
| Viskositätszahl [ml/g] | bestimmt bei 135 °C in Dekalin |
| Zeitstand | nach DIN 53759 |
| Schlagzähigkeit | nach DIN 8078 |

### Beispiel 1

Es wird in zwei hintereinandergeschalteten Rührkesseln von je 16 I Inhalt kontinuierlich polymerisiert. Beide Reaktoren sind mit 10 I flüssigem Propylen beschickt. Als Cokatalysator B wird Triethylaluminium in einer Konzentration von 1 mmol/l verwendet; die Konzentration des Stereoregulators C beträgt 0,1 mmol/l. Als Stereoregulator (C) wird Cyclohexylmethyldimethoxysilan verwendet. Die Wasserstoffkonzentration in der flüssigen Phase wird auf 60 Vol. ppm eingestellt.

Im ersten Reaktor wird ein Gemisch aus Propylen und Ethylen bei 70 °C in Gegenwart des Montell FT4S Katalysators polymerisiert. Katalysator, Cokatalysator, Ethylen, Propylen und Wasserstoff werden kontinuierlich nachdosiert. Pro kg Propylen wurden 15 g Ethylen eindosiert. Es wird ein Feststoffanteil von 224 g Polypropylen pro Liter Suspension gefahren. Daraus berechnet sich ein Phasenverhältnis von 3,3 l flüssiges Propylen pro kg Polypropylen. Wasserstoff wird so nachdosiert, daß sich in der flüssigen Phase eine Konzentration von 60 ppm einstellt.

Das im ersten Reaktor erhaltene Polypropylen wird zusammen mit dem Katalysator in den zweiten Reaktor überführt. Im zweiten Reaktor wird Ethylen, Wasserstoff und Propylen nachdosiert. Pro kg Propylen wurden 15 g Ethylen eindosiert. Die H₂-Konzentration in der flüssigen Phase beträgt 420 Vol. ppm. Die Reaktionstemperatur im zweiten Reaktor beträgt ebenfalls 70 °C. Es wird ein Feststoffanteil von 324 g PP pro Liter Suspension gefahren. Daraus berechnet sich ein Phasenverhältnis von 1,9 I flüssiges Propylen pro kg Polypropylen.

Nachdem das Polymerisat als Pulver aus dem zweiten Reaktor isoliert worden war, ergab sich eine Katalysatorausbeute von 26 kg Polypropylen/g Katalysator. Es wird eine Molmassenverteilung M_{w}/Mₙ von 9,0 gemessen, ein MFR-Wert von 0,8 dg/min, eine Viskositätszahl von 630 ml/g. IR-spektroskopisch wird ein C₂-Einbau von 3,6 Gew.-% gemessen. Der xylolkaltlösliche Anteil wird mit 7,9 Gew.-% gemessen.

### Vergleichsbeispiel 1

Es wurde verfahren wie in Beispiel 1. Das Phasenverhältnis flüssiges Propylen, gemessen in l pro kg Polypropylen, wurde jedoch in Reaktor 1 und Reaktor 2 auf den gleichen Wert eingestellt; in beiden Reaktoren wurde die gleiche Wasserstoffkonzentration eingestellt. Für M_{w}/Mₙ wurde ein Wert von 4,0 bestimmt.

### Beispiel 2

Das aus Beispiel 1 erhaltene Pulver wurde unter Inertgas in einem Zweischneckenextruder mit 53 mm Schneckendurchmesser bei ca. 240 °C granuliert. Dabei wurden als Stabilisatoren 0,15 % ®Irganox 1010 und 0,15 % ®Hostanox PAR 24 hinzugefügt. Außerdem wurde eine Farbmischung zugesetzt. Das erhaltene Granulat wurde einer M_{w}/Mₙ-Bestimmung unterzogen. M_{w}/Mₙ betrug 8,0.

### Vergleichsbeispiel 2

Das aus dem Vergleichsbeispiel 1 erhaltene Pulver wurde unter Inertgas in einem Zweischneckenextruder mit 53 mm Schneckendurchmesser bei ca. 240 °C granuliert. Dabei wurden als Stabilisatoren 0,15 % ®Irganox 1010 und 0,15 % ®Hostanox PAR 24 hinzugefügt. Außerdem wurde eine Farbmischung zugesetzt. Das erhaltene Granulat wurde einer M_{w}/Mₙ-Bestimmung unterzogen. M_{w}/Mₙ betrug 3,8.

Das so erhaltene Granulat wurde auf einer Rohrextrusionsanlage mit einem 60mm Nutbuchsenextruder und einem Vakuum-Sprühtank zu Rohren der Dimension 32x4,5 mm (Innendurchmesser = 32 mm, Wandstärke = 4,5 mm) verarbeitet. Der Massedurchsatz betrug 150 kg/h. Die Massetemperatur wurde auf 210 °C eingestellt. Die Rohroberfläche war sehr rauh.

### Beispiel 3

Das Granulat aus Beispiel 2 wurde auf einer Rohrextrusionsanlage mit einem 60mm Nutbuchsenextruder und einem Vakuum-Sprühtank zu Rohren der Dimension 32x4,5 mm (Innendurchmesser = 32 mm, Wandstärke = 4,5 mm) verarbeitet. Der Massedurchsatz betrug 150 kg/h. Die Massetemperatur wurde auf 210 °C eingestellt.

Es wurde festgestellt, daß die Verarbeitung sehr gleichmäßig verlief und die Rohroberflächen sowohl innen als auch außen sehr glatt waren. Die Rohroberfläche wurde charakterisiert, indem sie mit Rohren verglichen wurde, die aus einem Granulat mit enger Molmassenverteilung (s. Vergleichsbeispiel 2; M_{w}/Mₙ= 3.8) auf der gleichen Rohrextrusionsanlage unter gleichen Bedingungen gefertigt wurden. Die Schlagzähigkeit der Rohre (Beispiel 3) war gut und entsprach den Anforderungen nach DIN 8078 Abschnitt 3.5.

Die Rohre aus Beispiel 3 wurden verschiedenen Zeitstandsprüfungen entsprechend DIN 53759 unterzogen:

| Prüftemperatur | Prüfspannung | Mindeststandzeit (Soll) | erreichte Standzeit |
|---|---|---|---|
| 95 °C | 3,5 MPa | > 1000 h | > 5000 h |
| 95 °C | 3,7 MPa | > 300 h | > 2250 h |
| 120 °C | 2,3 MPa | > 300 h | > 2200 h |

Die in DIN 8078 (Rohre aus PP) vorgeschriebenen Mindeststandszeiten für PP-R wurden deutlich überschritten. Die Rohre nach Beispiel 3 besitzen ein sehr gutes Zeitstandsverhalten und eine hervorragend glatte Oberfläche.

### Vergleichsbeispiel 3

Es wurden Rohre aus bimodal hergestelltem Homo-PP Granulat (Herstellvorschrift nach DE -A-40 19 053 ) hergestellt. Diese Rohre wurden einem Zeitstand nach DIN 53759 unterzogen und die Oberflächenqualität nach DIN beurteilt. Die so hergestellten Rohre waren rauh und versagten im Zeitstand.

### Beispiel 4

In einer Polymerisations-Anlage mit zwei hintereinandergeschalteten Reaktoren wird Propylen zu Polypropylen (PP) polymerisiert. Der Katalysator (FT4S von Montell), Triethylaluminium und Cyclohexylmethyldimethoxysilan werden miteinander vermischt und in einem vorgeschalteten Vorpolymerisationsreaktor kontinuierlich in flüssigem Propylen vorpolymerisiert. Das Gemisch aus Katalysator, Triethylaluminium, Cyclohexylmethyldimethoxysilan, Propylen und Polypropylen wird in den ersten Reaktor eindosiert. Zusätzlich wird Propylen über ein Vorratsgefäß dem ersten Reaktor zugeführt. Im flüssigen Propylen werden Wasserstoff und Ethylen gelöst und über diesen Strom dann in den Reaktor eindosiert. Im flüssigen Propylen wird eine Konzentration von 60 ppm Wasserstoff eingestellt. In den ersten Reaktor werden 17 t/h Propylen eingefahren. Pro Tonne Propylen werden 7,5 kg Ethylen eindosiert. Im Reaktor wird Propylen in Anwesenheit des FT4S Katalysators zu PP umgesetzt. Dem ersten Reaktor wird kontinuierlich das Reaktionsgemisch entnommen und in den zweiten Reaktor eindosiert. In den zweiten Reaktor werden 7 t/h Propylen nachdosiert. In diesem Propylen Strom wird eine Konzentration von 420 ppm Wasserstoff eingestellt; es wird eine Konzentration von 7,5 kg Ethylen/t Propylen eingestellt. Nach Durchlaufen des zweiten Reaktors wird das Reaktionsgemisch in einem Rührkessel durch Entspannen auf 18 bar aufgearbeitet und das PP und die gasförmigen Komponenten voneinander separiert. Das gasförmige Propylen wird kondensiert, destilliert und anschließend in das Vorratsgefäß zurückgefahren. Pro Liter flüssiges Propylen, das in den ersten Reaktor eindosiert wird, werden 0,9 mmol Al, 0,18 mmol Donor und 5 µmol Katalysator (gemessen als µmol Ti) eindosiert.

Im ersten Reaktor wurde ein Phasenverhältnis von 3,3 I flüssiges Propylen pro kg PP eingestellt; im zweiten Reaktor wurde ein Phasenverhältnis von 1,9 I flüssiges Propylen pro kg PP eingestellt. Die aus den Reaktoren abgeführten Wärmemengen verhielten sich wie 1,4 : 1 (1. Reaktor/2. Reaktor). Das erhaltene PP Produkt weist eine Polydispersität M_{w}/Mₙ von 7,0 auf.

### Vergleichsbeispiel 4

Es wurde verfahren wie in Beispiel 5, es wurde jedoch im ersten und im zweiten Reaktor ein Phasenverhältnis von 3,3 I flüssiges Propylen pro kg PP eingestellt. Die aus den Reaktoren abgeführten Wärmemengen verhielten sich wie 3,4 : 1 (1. Reaktor/2. Reaktor).

Das erhaltene PP Produkt weist eine Polydispersität M_{w}/Mₙ von 4,8 auf. Das so erhaltene PP-Pulver wurde analog Beispiel 2 granuliert. Aus dem Granulat wurden Rohre analog Beispiel 3 hergestellt und einer Rohrzeitstandsprüfung analog Beispiel 4 unterzogen. Die Rohre wiesen eine sehr rauhe Rohroberfläche auf und erfüllten nicht die Anforderungen nach DIN 8078 Abschnitt 3.5.

Die Rohre wurden verschiedenen Zeitstandsprüfungen entsprechend DIN 53759 unterzogen: Die Sollwerte wurden nicht erreicht.

### Beispiel 5

Es wurde verfahren wie in Beispiel 4, jedoch wurde in den ersten Reaktor eine Ethylenmenge von 10 kg Ethylen/t Propylen und in den zweiten Reaktor eine Ethylenmenge von 5 kg Ethylen/t Propylen eingefahren. Das so erhaltene PP-Pulver wurde analog Beispiel 2 granuliert. Aus dem Granulat wurden Rohre analog Beispiel 3 hergestellt und einer Rohrzeitstandsprüfung analog Beispiel 4 unterzogen.

Die Anforderungen nach DIN 8078 Abschnitt 3.5 wurden erfüllt. Die Rohre wurden verschiedenen Zeitstandsprüfungen entsprechend DIN 53759 unterzogen:

| Prüftemperatur | Prüfspannung | Mindeststandzeit (Soll) | erreichte Standzeit |
|---|---|---|---|
| 95 °C | 3,5 MPa | > 1000 h | > 7000 h |
| 95 °C | 3,7 MPa | > 300 h | > 3250 h |
| 120 °C | 2,3 MPa | > 300 h | > 3250 h |

Die in DIN 8078 (Rohre aus PP) vorgeschriebenen Mindeststandszeiten für PP-R wurden deutlich überschritten. Die Rohre besitzen ein sehr gutes Zeitstandsverhalten und eine hervorragend glatte Oberfläche.

### Beispiel 6

Es wurde verfahren wie in Beispiel 5, jedoch wurde in den ersten Reaktor eine Ethylenmenge von 5 kg Ethylen/t Propylen und in den zweiten Reaktor eine Ethylenmenge von 10 kg Ethylen/t Propylen eingefahren.

Bei der Rohrprüfung wurden die Anforderungen nach DIN 8078 Abschnitt 3.5 erfüllt.

Die Rohre wurden verschiedenen Zeitstandsprüfungen entsprechend DIN 53759 unterzogen:

| Prüftemperatur | Prüfspannung | Mindeststandzeit (Soll) | erreichte Standzeit |
|---|---|---|---|
| 95 °C | 3,5 MPa | > 1000 h | > 5000 h |
| 95 °C | 3,7MPa | > 300 h | > 2250 h |
| 120 °C | 2,3MPa | > 300 h | > 2200 h |

Die in DIN 8078 (Rohre aus PP) vorgeschriebenen Mindeststandszeiten für PP-R wurden deutlich überschritten. Die Rohre besitzen ein sehr gutes Zeitstandsverhalten und hervorragend glatte Oberflächen.

### Beispiel 7

Es wurde verfahren wie in Beispiel 5, jedoch wurde in den ersten Reaktor eine Ethylenmenge von 15 kg Ethylen/t Propylen eingefahren und in den zweiten Reaktor eine Ethylenmenge von 1 kg Ethylen/t Propylen.

Bei der Rohrprüfung wurden die Anforderungen nach DIN 8078 Abschnitt 3.5 erfüllt. Die Rohre wurden verschiedenen Zeitstandsprüfungen entsprechend DIN 53759 unterzogen:

| Prüftemperatur | Prüfspannung | Mindeststandzeit (Soll) | erreichte Standzeit |
|---|---|---|---|
| 95 °C | 3,5 MPa | > 1000 h | > 7000 h |
| 95 °C | 3,7 MPa | > 300 h | > 3250 h |
| 120 °C | 2,3 MPa | > 300 h | > 3250 h |

Die in DIN 8078 (Rohre aus PP) vorgeschriebenen Mindeststandszeiten für PP-R wurden deutlich überschritten. Die Rohre besitzen ein sehr gutes Zeitstandsverhalten und hervorragend glatte Oberflächen.

### Beispiel 8

Es wurde verfahren wie in Beispiel 5, jedoch wurde in den zweiten Reaktor eine Ethylenmenge von 15 kg Ethylen/t Propylen eingefahren und in den ersten Reaktor eine Ethylenmenge von 1 kg Ethylen/t Propylen.

Bei der Rohrprüfung wurden die Anforderungen nach DIN 8078 Abschnitt 3.5 erfüllt. Die Rohre wurden verschiedenen Zeitstandsprüfungen entsprechend DIN 53759 unterzogen:

| Prüftemperatur | Prüfspannung | Mindeststandzeit (Soll) | erreichte Standzeit |
|---|---|---|---|
| 95 °C | 3,5 MPa | > 1000 h | > 1100 h |
| 95 °C | 3,7 MPa | > 300 h | > 350 h |
| 120 °C | 2,3 MPa | > 300 h | > 340 h |

Die in DIN 8078 (Rohre aus PP) vorgeschriebenen Mindeststandszeiten für PP-R wurden deutlich überschritten. Die Rohre besitzen ein sehr gutes Zeitstandsverhalten und hervorragend glatte Oberflächen.

### Beispiel 9

Es wurde verfahren wie in Beispiel 4, jedoch wurde Dicyclopentyldimethoxysilan als Stereoregulator verwendet. Die Konzentration beträgt 0,036 mmol Dicyclopentyldimethoxysilan pro I flüssiges Propylen. In den ersten Reaktor wurden 40 ppm Wasserstoff eindosiert. In den zweiten Reaktor wurde im Eingasstrom eine Konzentration von 3500 mol-ppm Wasserstoff eingestellt. Es stellte sich eine Kontaktausbeute von 30 kg PP/g Katalysator ein. Am Endprodukt wird eine Molmassenverteilung M_{w}/Mₙ von 18,5 gefunden. Der MFR(230/5) Wert beträgt 0,8 dg/min. Pro Tonne Propylen werden sowohl im ersten als auch im zweiten Reaktor 7,5 kg Ethylen eindosiert.

Granulierung und Rohrherstellung wurden analog Beispiel 2 und Beispiel 3 ausgeführt. Bei der Rohrprüfung wurden die Anforderungen nach DIN 8078 Abschnitt 3.5 erfüllt. Die Rohre wurden verschiedenen Zeitstandsprüfungen entsprechend DIN 53759 unterzogen:

| Prüftemperatur | Prüfspannung | Mindeststandzeit (Soll) | erreichte Standzeit |
|---|---|---|---|
| 95 °C | 3,5 MPa | > 1000 h | > 7900 h |
| 95 °C | 3,7 MPa | > 300 h | > 3550 h |
| 120 °C | 2,3 MPa | > 300 h | > 3500 h |

Die in DIN 8078 (Rohre aus PP) vorgeschriebenen Mindeststandszeiten für PP-R wurden deutlich überschritten. Die Rohre besitzen ein sehr gutes Zeitstandsverhalten und excellent glatte Oberflächen.

### Beispiel 10

Es wurde verfahren wie in Beispiel 9, jedoch wurde in den ersten Reaktor eine Ethylenmenge von 10 kg Ethylen/t Propylen und in den zweiten Reaktor eine Ethylenmenge von 5 kg Ethylen/t Propylen eingefahren. Nach Granulierung des Pulvers und Herstellung von Rohren aus dem Granulat gemäß den Vorschriften in den Beispielen 2 und 3 ergab die Zeitstandprüfung nach DIN 53759 an den so hergestellten Rohren, daß die Sollwerte wiederum deutlich übertroffen wurden; die Rohroberflächen innen wie außen waren excellent glatt.

### Beispiel 11

Es wurde verfahren wie in Beispiel 9, jedoch wurde in den ersten Reaktor eine Ethylenmenge von 10 kg Ethylen/t Propylen und in den zweiten Reaktor eine Ethylenmenge von 5 kg Ethylen/t Propylen von eingefahren. Nach Granulierung des Pulvers und Herstellung von Rohren aus dem Granulat gemäß den Vorschriften in den Beispielen 2 und 3 ergab die Zeitstandprüfung nach DIN 53759 an den so hergestellten Rohren, daß die Sollwerte wiederum deutlich übertroffen wurden; die Rohroberflächen innen wie außen waren excellent glatt.

### Beispiel 12

Es wurde verfahren wie in Beispiel 4, jedoch wurde Diphenyldimethoxysilan als Stereoregulator verwendet. An dem Pulver wurde ein M_{w}/Mₙ-Wert von 6,1 gemessen. Die Zeitstandprüfung nach DIN wurde übertroffen; die Rohroberfläche war glatt.

### Beispiel 13

Es wurde verfahren wie in Beispiel 9, jedoch wurde in den ersten Reaktor 80 ppm Wasserstoff eindosiert, in den zweiten Reaktor 1500 ppm Wasserstoff. Am Pulver wurde ein M_{w}/Mₙ-Wert von 12,5 gemessen. Die Zeitstandprüfung an Rohren, die aus diesem Pulver gemäß den Vorschriften der Beispiele 2 und 3 hergestellt wurden, nach DIN wurde übertroffen; die Rohroberfläche war glatt.

## Patentansprüche

1. Verfahren zur Herstellung von Rohren aus einem Copolymerisat aus Ethylen- und Propylenbausteinen, das einen Ethylengehalt im Bereich von 1 bis 10 Gew.-%, einen Schmelzflussindex MFR (230/5) von weniger als 5 g/10 min und eine Molmassenverteilung M_{w}/Mₙ im Bereich von 6 bis 20 besitzt durch Copolymerisation von Propylen und Ethylen, ggf. mit einem weiteren 1-Olefin mit 4 bis 20 C-Atomen, in Suspension, wobei das Propylen gleichzeitig Edukt und Suspensionsmittel ist, bei einem Druck von 10 bis 100 bar und einer Verweilzeit von 0,5 bis 6 h in Gegenwart eines Katalysators, einer aluminiumorganischen Verbindung (B) und einer Organosiliciumverbindung (C), **dadurch gekennzeichnet, dass** zunächst die Polymerisation in zwei Reaktionsstufen durchgeführt wird, wobei in einer ersten kontinuierlichen Reaktionsstufe ein Polypropylen mit einer Viskosität von 500 bis 1400 ml/g und einem Anteil am Gesamtpolymeren von 20 bis 80 Gew.-% bei einer Temperatur von 55 bis 100 °C und einer Verweilzeit von 0,5 bis 3,5 Stunden polymerisiert wird, wobei ein Phasenverhältnis von 2,5 1 bis 4l flüssiges Propylen pro kg Polypropylen eingestellt wird, und in der zweiten kontinuierlichen Reaktionsstufe bei einer Temperatur von 55 bis 100 °C polymerisiert wird, wobei ein Phasenverhältnis von 1 bis 2,5 l flüssiges Propylen pro kg Polypropylen eingestellt wird, wobei nach der zweiten kontinuierlichen Reaktionsstufe das Gesamtpolymer eine Viskosität von 400 bis 700 ml/g aufweist und in der ersten und zweiten Reaktionsstufe unterschiedliche Phasenverhältnisse eingestellt werden, und anschließend das erhaltene Propylen/Ethylen Copolymerisat wird im Inertgasstrom trocknet, so daß das Copolymerisat monomerfrei ist, das erhaltenen Copolymerisat mit Stabilisatoren, Gleitmittels, Füllstoffen, Pigmenten verseht und in einem Extruder oder Kneter granuliert und das Granulat mittels Extrusionsverfahren zu Rohren verarbeitet.

2. Verfahren nach Anspruch 1, wobei das Copolymerisat einen MFR (230/5) im Bereich von 0,02 bis 2 g/10 min und eine Molmassenverteilung M_{w}/Mₙ im Bereich von 7 bis 18 besitzt und zu 2 bis 8 Gew.-% aus Ethylenbausteinen aufgebaut ist.

3. Verfahren nach Anspruch 1 oder 2, **dadurch gekennzeichnet, dass** eine Vorpolymerisation durchgeführt wird, wobei die Komponente B und die Komponente C vor der Vorpolymerisation miteinander vermischt und dann mit dem Katalysator in Kontakt gebracht werden und wobei in Gegenwart dieser aktiven Komponenten Propylen in Suspension bei einer Verweilzeit von 4 bis 10 Min. und einer Temperatur im Bereich von 10 bis 25 °C vorpolymerisiert wird.

4. Verfahren nach einem der Ansprüche 1 bis 3, **dadurch gekennzeichnet, dass** in der ersten Reaktionsstufe eine Ethylenkonzentration in der flüssigen Phase von 0,1 bis 20 Gew.-% eingestellt wird.

5. Verfahren nach einem der Ansprüche 1 bis 4, **dadurch gekennzeichnet, dass** als Komponente B Trimethylaluminium, Triisobutylaluminium oder Triethylaluminium eingesetzt werden.

6. Verfahren nach einem der Ansprüche 1 bis 5, **dadurch gekennzeichnet, dass** als Komponente C Cyclohexylmethyldimethoxysilan, Biscyclopentyldimethoxysilan oder Diphenyldimethoxysilan eingesetzt werden.

7. Verfahren nach einem der Ansprüche 1 bis 6, **dadurch gekennzeichnet, dass** die Komponente B in einer Konzentration von 0,001 bis 10 mmol/l, vorzugsweise von 0,1 bis 5 mmol/l eingesetzt wird.

8. Verfahren nach einem der Ansprüche 1 bis 7, **dadurch gekennzeichnet, dass** die Komponente C in einem Verhältnis R zur Komponente B, dass sich als Quotient der Konzentration B zu der Konzentration C jeweils in mol/l berechnet und das im Bereich von 1 bis 200, bevorzugt 2 bis 100, besonders bevorzugt 2,5 bis 75 liegt, eingesetzt wird.

## Claims

1. A process for producing pipes from a copolymer made from ethylene units and from propylene units and having an ethylene content in the range from 1 to 10% by weight, a melt flow index MFR (230/5) below 5 g/10 min, and a polydispersity M_{w}/Mₙ in the range from 6 to 20, by copolymerizing propylene and ethylene, optionally with another 1-olefin having from 4 to 20 carbon atoms, in suspension, in which the propylene is simultaneously educt and suspending agent, at a pressure of from 10 to 100 bar and a residence time of 0.5 to 6 h in the presence of a catalyst, of an organoaluminum compound (B) and of an organosilicon compound (C), wherein polymerization is first carried out in a two-stage reaction, in which in a first continuous stage of the reaction a polypropylene with a viscosity of 500 to 1400 ml/g and a proportion in the total polymer of 20 to 80 % by weight is polymerized at a temperature of 55 to 100°C and a residence time of 0.5 to 3.5 hours, in which a phase ratio of 2.5 l to 4 l of liquid propylene per kg of polypropylene is set, and in the second continuous stage of the reaction polymerization is carried out at a temperature of 55 to 100°C, in which a phase ratio of 1 to 2.5 l of liquid propylene per kg of polypropylene is established, in which after the second continuous stage of the reaction the total polymer has a viscosity of 400 to 700 ml/g and different phase ratios are set in the first and second stages of the reaction, and then the resultant propylene-ethylene copolymer is dried in a stream of inert gas, such that the copolymer contains no monomer, the resultant copolymer is provided with stabilizers, slip agents, fillers, pigments and converted into pellets in an extruder or kneader and the pellets are processed by an extrusion process to give pipes.

2. The process as claimed in claim 1, in which the copolymer has an MFR (230/5) in the range from 0.02 to 2 g/10 min and a polydispersity M_{w}/Mₙ in the range from 7 to 18, and is composed of from 2 to 8% by weight of ethylene units.

3. The process as claimed in claim 1 or 2, wherein a prepolymerization is carried out, in which component B and component C are mixed with one another prior to the prepolymerization and are then brought into contact with the catalyst and in which propylene is prepolymerized in suspension in the presence of these active components with a residence time of from 4 to 10 min and at a temperature in the range from 10 to 25°C.

4. The process as claimed in any of claims 1 to 3, wherein in the first stage of the reaction the ethylene concentration in the liquid phase is set at from 0.1 to 20% by weight.

5. The process as claimed in any of claims 1 to 4, wherein use is made of trimethylaluminum, triisobutylaluminum or triethylaluminum as component B.

6. The process as claimed in any of claims 1 to 5, wherein use is made of cyclohexylmethyldimethoxysilane, biscyclopentyldimethoxysilane or diphenyldimethoxysilane as component C.

7. The process as claimed in any of claims 1 to 6, wherein use is made of component B at a concentration of from 0.001 to 10 mmol/l, preferably from 0.1 to 5 mmol/l.

8. The process as claimed in any of claims 1 to 7, wherein use is made of component C in a ratio R to component B, calculated in each case in mol/l as the quotient derived by dividing the concentration of B by the concentration of C, which is in the range from 1 to 200, preferably from 2 to 100, particularly preferably from 2.5 to 75.

## Revendications

1. Procédé pour la préparation de tuyaux à partir d'un copolymère composé de motifs éthylène et propylène, qui présente une teneur en éthylène dans la plage de 1% à 10% en poids, un indice de viscosité MFR (230/5) inférieur à 5 g/10 minutes et une répartition des masses molaires Mₘ/Mₙ dans la plage de 6 à 20, au moyen d'une copolymérisation du propylène et de l'éthylène et, éventuellement, d'une autre 1-oléfine comprenant 4 à 20 atomes de C, en suspension, où le propylène est simultanément un produit de départ et un agent de mise en suspension, à une pression de 10 à 100 bars et un temps de séjour de 0,5 à 6 h en présence d'un catalyseur, d'un composé alumino-organique (B) et d'un composé organosilicié (C), **caractérisé en ce qu'**on réalise d'abord la polymérisation en deux étapes de réaction, où on polymérise, dans une première étape de réaction continue, un polypropylène présentant une viscosité de 500 à 1400 ml/g et une proportion totale de polymère de 20 à 80% en poids à une température de 55 à 100°C et un temps de séjour de 0,5 à 3,5 heures, en ajustant un rapport de phases de 2,5 l à 4 l de propylène liquide par kg polypropylène, et dans la deuxième étape de réaction continue, à une température de 55 à 100°C, en ajustant un rapport de phases de 1 à 2,5 l de propylène liquide par kg de polypropylène, où le polymère total présente, après la deuxième étape de réaction continue, une viscosité de 400 à 700 ml/g et où on ajuste dans la première et la deuxième étape de réaction des rapports de phases différents, puis on sèche le copolymère de propylène/éthylène obtenu dans un flux de gaz inerte, de manière telle que le copolymère est exempt de monomère, on apprête le copolymère obtenu avec des stabilisateurs, des lubrifiants, des charges, des pigments et on le granule dans une extrudeuse ou un malaxeur et on transforme le granulat au moyen de procédés d'extrusion en tuyaux.

2. Procédé selon la revendication 1, dans lequel le copolymère présente un MFR (230/5) dans la plage de 0,02 g/10 minutes à 2 g/10 minutes et une répartition des masses molaires Mₘ/Mₙ dans la plage de 7 à 18, et est composé de motifs éthylène à raison de 2% à 8% en poids.

3. Procédé selon la revendication 1 ou 2, **caractérisé en ce que** l'on réalise une prépolymérisation où on mélange l'un avec l'autre, avant la prépolymérisation, le composant B et le composant C puis on les met en contact avec le catalyseur, et où, en présence de ces composants actifs, on réalise la prépolymérisation du propylène en suspension, avec un temps de séjour allant de 4 minutes à 10 minutes et à une température allant de 10°C à 25°C.

4. Procédé selon l'une quelconque des revendications 1 à 3, **caractérisé en ce que** l'on ajuste, dans la première étape de réaction, une concentration en éthylène dans la phase liquide allant de 0,1% à 20% en poids.

5. Procédé selon l'une quelconque des revendications 1 à 4, **caractérisé en ce que** l'on met en oeuvre, en tant que composant B, du triméthylaluminium, du triisobutylaluminium ou du triéthylaluminium.

6. Procédé selon l'une quelconque des revendications 1 à 5, **caractérisé en ce que** l'on met en oeuvre, en tant que composant C, du cyclohexylméthyldiméthoxysilane, du dicyclopentyldiméthoxysilane ou du diphényldiméthoxysilane.

7. Procédé selon l'une quelconque des revendications 1 à 6, **caractérisé en ce que** l'on met en oeuvre le composant B à une concentration allant de 0,001 mmole/l à 10 mmoles/l, de préférence de 0,1 mmole/l à 5 mmoles/l.

8. Procédé selon l'une quelconque des revendications 1 à 7, **caractérisé en ce que** l'on met en oeuvre le composant C dans une proportion R par rapport au composant B que l'on calcule en tant que quotient de la concentration B à la concentration C, à chaque fois en mole/l, et qui est situé dans la plage allant de 1 à 200, de préférence de 2 à 100 et de manière particulièrement préférée de 2,5 à 75.
